# EUROPEAN PATENT APPLICATION

(11) **EP 4 369 687 A1**
(43) Date of publication of application: **15.05.2024**
(21) Application number: 23200685.8
(22) Date of filing: 28.09.2023
(51) Int. Cl.: H04L 67/06, H04L 67/12, H04L 67/00, H04L 69/14

(54) **DISSEMINATED TANGIBLE DATA TRANSFER TO REMOTE ELECTRONIC DEVICE**

(30) Priority: 11.11.2022 SE 2251332
(71) Applicant: Sony Group Corporation, Tokyo 108-0075 (JP)
(72) Inventor: SPJUTH, Pär, Basingstoke, RG22 4SB (GB); SUNDSTRÖM, Henrik, Basingstoke, RG22 4SB (GB); ISBERG, Anders, Basingstoke, RG22 4SB (GB)
(74) Representative: Neij & Lindberg AB

(57) **Abstract**

A data file (60) is transferred to an electronic device, TD (10). The data transfer involves separating the data file (60) into plural data segments (60A), encoding the data segments (60A) in or on physical carriers (3') so that each one of the carriers (3') is encoded with one data segment among the plural data segments (60A) and each of the data segments among the plural data segments (60A) is encoded in or on multiple carriers (3'), forming a distribution set (3) comprising the carriers (3') for all data segments (60A), and disseminating (104) the distribution set (3) within a target area (1) for receipt by the TD (10). The TD (10) is operated to retrieve data items (60A'), which correspond to the data segments (60A), from carriers (3') in the distribution set (3) as received by the TD (10), and recreate the data file (60) based at least partly on the retrieved data items (60A').

## Description

### Technical Field

The present disclosure relates generally to data transfer, in particular, to transfer of a data file to a remote electronic device with limited or restricted capability of wireless communication.

### Background Art

Conventionally, wireless radio communication is used for transferring digital data from a server to remote electronic devices. However, the electronic devices may be located in a region with limited or no access to the radio communication network. Further, even if the electronic devices have access to the radio communication network, the data transfer consumes energy, both at the server and at the electronic devices. If the bandwidth is limited, the data transfer to each electronic device may take a long time and block the available radio spectrum for other electronic devices. Further, wireless radio communication is instantaneous, requiring synchronization between the server and the respective electronic device. This synchronization also consumes energy.

It is realized that wireless radio communication may be at odds with the use of electronic devices with low power consumption and/or low bandwidth, at least if the amount of digital data to be transferred is relatively large. For example, the digital data may be configuration data for the electronic device, to update or modify its functionality or operation.

Electronic devices with low power consumption and limited capability of data transfer by wireless radio communication are becoming more and more common, partly driven by the proliferation of Internet of Things (IoT) devices. In some applications, the electronic devices are provided with sensors and distributed across a vast area. The sensor data measured by the respective electronic device is collected at a central site to monitor, online or offline, the status of one or more sensor parameters measured by the electronic devices across the vast area. Examples of such applications include agriculture, smart cities, wildlife research, environmental research, etc.

There is an emerging need for a technique of transferring digital data to these types of electronic devices.

### Brief Summary

It is an objective to at least partly overcome a limitation of the prior art.

Another objective is to provide an alternative technique of transferring a data file to an electronic device located in a remote target area.

A further objective is to reduce the required power consumption of the electronic device to receive the data file.

One or more of these objectives, as well as further objectives that may appear from the description below, are at least partly achieved by a method of distributing a data file and an electronic device according to the independent claims, embodiments thereof being defined by the dependent claims.

Still other objectives, as well as features, aspects and technical effects will appear from the following detailed description, from the attached claims as well as from the drawings.

### Brief Description of Drawings

FIG. 1 shows an example of how encoded carriers are disseminated within a target area in accordance with embodiments.
FIG. 2A is a flow chart of an example method of transferring a data file to electronic devices within a target area, and FIG. 2B is a flow chart of a method of operating an electronic device to recreate the data file.
FIG. 3A is a schematic illustration of communication in relation to a group of electronic devices, and FIG. 3B is a block diagram of an example electronic device.
FIG. 4A is a block diagram of example input data and output data of a simulation device, and FIG. 4B is a flow chart of an example method of operating a simulation device.
FIGS 5A-5B schematically illustrate different uses of simulation output data for dissemination of encoded carriers and electronic devices within a target area.
FIG. 6 schematically illustrate use of simulation output data for generation of encoded carriers.
FIGS 7A-7C show examples of encoded carriers.
FIGS 8A-8C show examples of mechanisms in electronic devices for collecting and reading encoded carriers.
FIG. 9 illustrates transfer of a data file to a plurality of electronic devices in accordance with an embodiment.
FIG. 10 is a block diagram of an example power management system in an electronic device.
FIG. 11 is a block diagram of a computational machine that may implement functions disclosed herein.

### Detailed Description of Example Embodiments

Embodiments will now be described more fully hereinafter with reference to the accompanying drawings, in which some, but not all, embodiments are shown. Indeed, the subject of the present disclosure may be embodied in many different forms and should not be construed as limited to the embodiments set forth herein; rather, these embodiments are provided so that this disclosure may satisfy applicable legal requirements.

Also, it will be understood that, where possible, any of the advantages, features, functions, devices, and/or operational aspects of any of the embodiments described and/or contemplated herein may be included in any of the other embodiments described and/or contemplated herein, and/or vice versa. In addition, where possible, any terms expressed in the singular form herein are meant to also include the plural form and/or vice versa, unless explicitly stated otherwise. As used herein, "at least one" shall mean "one or more" and these phrases are intended to be interchangeable. Accordingly, the terms "a" and/or "an" shall mean "at least one" or "one or more", even though the phrase "one or more" or "at least one" is also used herein. As used herein, except where the context requires otherwise owing to express language or necessary implication, the word "comprise" or variations such as "comprises" or "comprising" is used in an inclusive sense, that is, to specify the presence of the stated features but not to preclude the presence or addition of further features in various embodiments.

As used herein, the terms "multiple", "plural" and "plurality" are intended to imply provision of two or more elements. The term "and/or" includes any and all combinations of one or more of the associated listed elements.

It will furthermore be understood that, although the terms first, second, etc. may be used herein to describe various elements, these elements should not be limited by these terms. These terms are only used to distinguish one element from another. For example, a first element could be termed a second element, and, similarly, a second element could be termed a first element, without departing the scope of the present disclosure.

Well-known functions or constructions may not be described in detail for brevity and/or clarity. Unless otherwise defined, all terms (including technical and scientific terms) used herein have the same meaning as commonly understood by one of ordinary skill in the art to which this disclosure belongs.

As used herein, the term "encode" generally refers a process of storing digital data in tangible form, i.e. on a physical device, unit or element. Thus, an encoded carrier is a physical carrier that stores digital data in any suitable way.

Like numerals refer to like elements throughout.

The present disclosure relates to data transfer to a remote electronic device, which is denoted "target device", TD, and may be configured to perform any conceivable task. In some examples, the TD comprises a sensor arrangement, which is operable to measure sensor data. The sensor data may be stored in internal memory and/or output by wireless data transmission. A plurality of TDs may be distributed across an extended area to monitor one or more sensor parameters. The resulting sensor data from the plurality of TDs may be collected and analyzed to gain an understanding of the spatial distribution, and optionally the temporal distribution, of measured sensor values within the extended area. As noted in the Background section, this type of TD may be deployed for a variety of monitoring purposes, including agriculture, smart cities, wildlife research, environmental research, etc.

The TD is typically a self-powered unit, which is autonomously operated to perform its task in accordance with a predefined operating schedule. To minimize power consumption, the TD is in a low-power or sleep mode most of the time. The predefined schedule defines when the TD is to be activated to read and, optionally, transmit sensor data.

It may be desirable to transfer configuration data to the TD before and/or during its deployment. The configuration data may include firmware or software, calibration data for the sensor arrangement, an operating schedule, a data processing model or model parameters for such a data processing model, etc. The data processing model may be a machine learning-based (ML) model, for example a neural network (NN) model. The data processing model may, for example, be used for processing the sensor data.

In many cases, wireless transfer of the configuration data to the TD may not be possible. For example, the TD may not have a wireless receiver. If a wireless receiver is present, its data rate may be too limited for transfer of the configuration data. The data rate may be limited by the design of the wireless receiver or by power constraints of the TD. Further, to preserve energy, the wireless receiver may be rarely activated and only for a short period of time, making data transfer difficult. One alternative to wireless transfer is to perform a local transfer of the configuration data by physically connecting a configuration device to each individual TD. However, such an approach is labor intensive and costly.

The present disclosure provides a novel concept for data transfer that overcomes or mitigates these problems. The concept is denoted "disseminated tangible data transfer", abbreviated DT2. According to the DT2 concept, to transfer bulk data to one or more TDs, the bulk data is segmented and duplicated into a large quantity of physical carriers. Each carrier is thus a tangible representation of part of the bulk data. The carriers are disseminated within a target area that includes the one or more TDs. The respective TD is configured to receive carriers, recover or retrieve data items from the received carriers, and reassemble (recreate) the bulk data from the recovered data items.

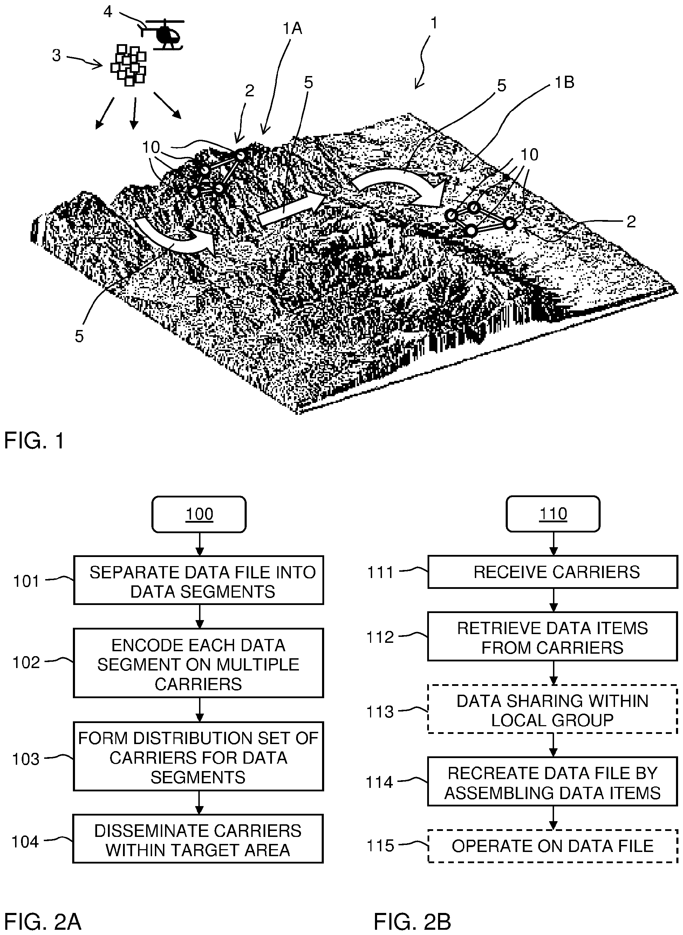

The DT2 concept will be exemplified with reference to FIG. 1, which is a perspective view of a geographic area 1, which includes TDs 10 (open circles) that are spatially organized into two groups or clusters 2. A first cluster 10 is located in an upland region 1A, and a second cluster 10 is located in a lowland region 1B. The above-mentioned bulk data is rendered in tangible form as physical carriers, which collectively form a distribution set 3. The distribution set 3 is released within the geographic area 1 by a release vehicle 4, here a helicopter. Thereby, the physical carriers are disseminated within the geographic area 1 for receipt by the TDs 10 in the first and second clusters 10. In the illustrated example, the carriers are released above the upland region 1A. A portion of the carriers thereby falls onto the first cluster 10 in this region, whereas another portion of the carriers is transported by environmental transport mechanisms, ETMs, 5 to the second cluster 10 in the lowland region 1B. In the illustrated example, the ETMs 5 may include winds and a river that flows from the upland region to the lowland region.

It is realized that the DT2 concept may benefit from simulations of the ETMs 5 to determine when, where and how to release the distribution set 3 in the geographic area 1, and also how to configure the carriers, so as to optimize the probability that the TDs 10 receive the carriers to such an extent that they are capable of recreating the bulk data. As will be described in more detail below, further measures may be taken to improve the data transfer by the DT2 concept, for example to use data sharing among the TDs 10 within a cluster 2.

The DT2 concept may be seen to involve a high-bandwidth broadcast of bulk data by tangible means. The DT2 concept thereby obviates the need for a wireless receiver in the TD 10. Although a wireless receiver may be present in the TD 10, the wireless receiver need not be used for receiving bulk data, thereby reducing the energy consumption and leaving the radio spectrum free for other uses. Further, the high-bandwidth broadcast is received by TDs during a long reception period, which is temporally separated from the time point of the broadcast, i.e. the release of the distribution set 3. This is in contrast to wireless transmission, which requires simultaneous transmission and reception. By disconnecting transmission and reception in accordance with the DT2 concept, the energy consumption of the TD 10 will be low, since it may collect carriers over an extended time period and reassemble the bulk data or part thereof at any suitable time point.

The DT2 concept also enables data transfer where electronic data transfer by wireless or wired communication is not possible or at least difficult. For example, by configuring the carriers to be heavier than sea water, it is possible to transfer bulk data to TDs on deep sea equipment.

The DT2 concept may also be implemented to prepare an area for subsequent data transfer to TDs 10, by disseminating carriers within the area before the TDs 10 are distributed within the area. The respective TD may then collect carriers in its vicinity and recreate bulk data that controls its operation. Such implementations enable advanced and distributed configuration of TDs, for example contextual configuration and location-based processing by ML models or other models.

The DT2 concept also makes it possible to tailor the data transfer by adapting one or more properties of the carriers and/or by adapting the data input mechanism in the TDs. In one example, the carriers contain signed and/or encrypted data and only relevant TDs have access to keys that enable data extraction from received carriers. Thereby, only authorized sources are capable of transferring bulk data to the TDs. In another example, the carriers are coated by sugar and represent bulk data that causes the receiving TD to count insects. The sugar attracts insects, which will harvest and/or destroy the carriers. Thereby, only TDs in areas with few insects will receive the bulk data and be operated to count insects. In another example, TDs are located in a pipe manifold and configured by default to scan for rust flakes, and the carriers are made of a corrodible material and represent bulk data that causes the receiving TD to scan for rats. Such carriers will deteriorate in low pH environments, causing only TDs in these environments to scan for rust flakes, whereas all other TDs are reconfigured by the bulk data to scan for rats.

The data transfer may also be tailored by adapting the technique used for releasing the carriers. For example, the carriers may be mixed with a carrier fluid and poured over a geographical area, thereby enabling the carriers to reach TDs that are embedded in the ground and/or to spread the carriers uniformly over an extended area.

FIG. 2A is a flow chart of an example data transfer method 100 in accordance with the DT2 concept. The method 100 is implemented to transfer a data file to one or more TDs. As used herein, "data file" is synonymous to the above-mentioned bulk data and refers to any type of computer file that holds digital data to be used by a computer application or system. The data in the data file may be of any type, including but not limited to parameter values, instructions, executable code, a database, etc. As noted above, the data file may, for example, include configuration data for the TD.

In step 101, the data file is separated into a plurality of data segments so that the data segments jointly represent the data file. The plurality of data segments thereby together make up the data file. The data segments may be mutually exclusive (disjoint), in that there is no overlapping content between the data segments. Alternatively, the data file may be separated into partially overlapping data segments. In step 101, additional metadata may be added to or embedded in the data segments, for example to enable or facilitate the re-assembly of the data file from the data segments. For example, the metadata may uniquely identify the data segments and/or identify an ordering of the data segments during re-assembly. The metadata may be provided in a header portion of the data segment. In principle, step 101 may be implemented by analogy with any existing protocol for electronic transfer of data files in smaller chunks, such as the BitTorrent protocol or similar or equivalent protocols.

In step 102, the data segments are encoded in or on physical carriers, so that each one of the physical carriers is encoded with one data segment from the plurality of data segments and each data segment is encoded in or on multiple physical carriers. Thereby, step 102 results in multiple instances of each data segment. In other words, each data segment is duplicated in tangible form. The number of carriers per data segment may be determined in a preceding simulation (below). The number of carriers may or may not differ between data segments. For example, if the weight of the carriers differ between different data segments, the number of carriers may be adjusted to achieve a similar probability of arrival at the TD for all data segments. In some embodiments, a machine-readable code that encodes the data segment is provided in or on the carrier in step 102. Any type of machine-readable code may be used to represent the digital data of the data segment. In one example, the machine-readable code is a pattern on or in the carrier. The pattern may any type of one-, two- or three-dimensional pattern. The properties of the pattern are selected to conform with the capabilities of a reading unit in the TD (below). For example, the pattern may be encoded in an optically detectable pattern, a tactile pattern, or a magnetic pattern. In some embodiments, a DNA sequence that encodes the data segment is embedded in the carrier in step 102. The DNA sequence is a strand of DNA that is synthesized to represent the digital data of the data segment. Step 102 may be implemented by use of any technique for DNA digital data storage.

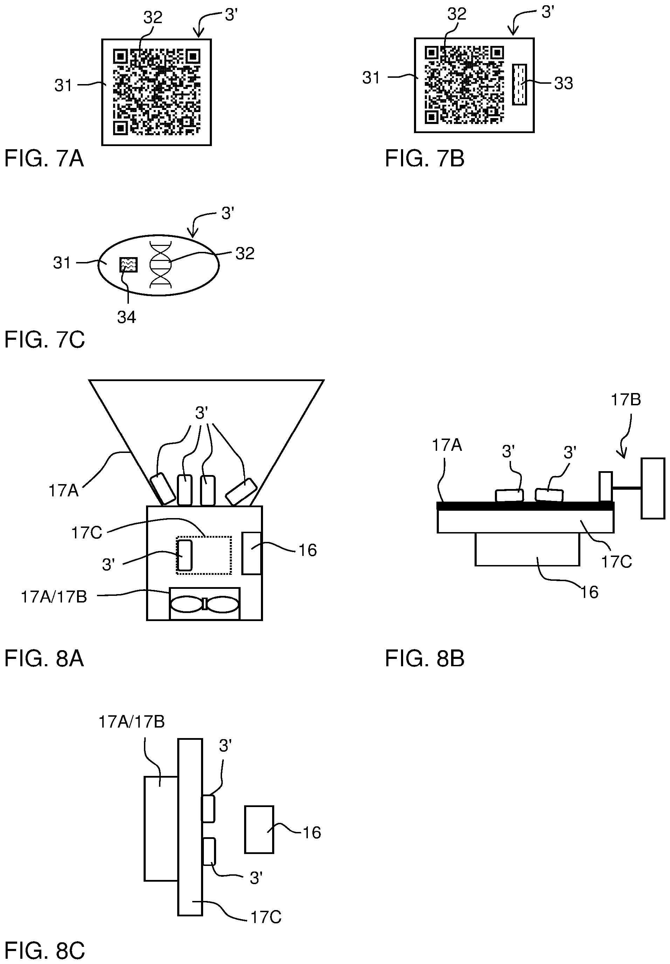

As will be further described below with reference to FIGS 7A-7C, step 102 may also involve adding one or more detectable markers, which are physically or logically separate from encoded data segment, to identify the carrier and/or to quantify a degradation of the carrier or data segment. Such a detectable marker may be an alternative or supplement to the above-mentioned metadata.

In step 103, the carriers resulting from step 102 are aggregated into one or more distribution sets 3. Each distribution set is dedicated to being released in a specific way and at a specific location. If plural distribution sets are formed, the carriers may be thoroughly mixed before being separated into distribution sets, to achieve a uniform distribution of carriers between the distribution sets. In step 103, the carriers may be mixed with a carrier fluid to form the distribution set. The carrier fluid may a liquid such as irrigation water, liquid fertilizer, liquid pesticide, etc. Alternatively, the carrier fluid may consist of particles, for example particulate fertilizer, plant seeds, particulate pesticide, cloud seeding particles, etc. If plural distribution sets are formed, different carrier fluids may be used in different distribution sets, and/or distribution sets may be formed without and with carrier fluid, respectively.

In step 104, the respective distribution set is disseminated within a target area for receipt by the TD. As used herein, "target area" is the area within which the one or more TDs to receive the data file is located or will be located and within which the respective distribution set is released. Step 104 does not require the distribution set to be disseminated throughout the entire target area. Rather, the target area is the geographic area that is relevant for ensuring that a sufficient number of carriers reach the respective TD. The target area is thus considered in a preceding simulation if such a simulation is performed to simulate the transport of carriers from release to receipt. In the example of FIG. 1, the target area may correspond to the geographic area 1. In some embodiments, as exemplified in FIG. 1, step 104 involves releasing the distribution set 3 in the target area 1 so as to allow one or more ETMs 5 to spread the included carriers within the target area 1. Step 104 may be performed by use of any suitable release vehicle 4, including an aircraft (helicopter, drone, airplane, etc.), a watercraft (boat, ship, hovercraft, submarine, etc.), or a ground vehicle (car, truck, agricultural vehicle, etc.). It is also conceivable to perform step 104 by use of a stationary device, such as a snow cannon, air fan, spray nozzle, etc. Different ETMs 5 may be involved in different situations, for example depending on the release technique, if a carrier fluid is used or not, properties of the carriers, TD location, etc. Typically, the carriers 5 are spread by at least one of wind, diffusion and water flow. As used herein, wind refers to a perceptible natural movement of air, diffusion refers to a net movement from a location of higher concentration to a location of lower concentration, and water movement refers to a natural flow of liquid water, for example in a river, by sea currents, or rain.

FIG. 2B is a flow chart of an example data reception method 110 in accordance with the DT2 concept. The method 100 is performed by the respective TD to receive the data file. In step 111, the TD receives carriers. This may be performed passively, without consuming power, or actively. Examples of techniques for collecting carriers will be presented below with reference to FIGS 8A-8C. In step 112, the TD retrieves data items from the carriers that have been received in step 111. The data retrieval in step 112 is also denoted reading or decoding herein. The respective data item corresponds to the data segment that was encoded in or on the respective carrier by step 102. In step 112, the TD need not read data items from all received carriers. In some embodiments, carriers containing different data items are discriminable by a dedicated marker in or on the carriers, and when the TD has retrieved a particular data item, all other carriers with this data item are excluded from step 112. In step 114, a data set corresponding to the data file is recreated by assembling the data items. Thereby, the data file is recreated at the TD. In some embodiments, all data items are retrieved from carriers received by the TD. However, as shown in FIG. 2B, the method 110 may comprises a data sharing step 113, in which data items are shared between TDs in a cluster 2 (FIG. 1). Thereby, some data items used in step 114 may originate from step 112 as performed by one or more other TDs within the cluster. In step 115, when the data file has been recreated, the TD may operate on the contents of the data file. The operation may be predefined to the TD or given by the data file. For example, the TD may store one or more parameter values included in the data file, perform an instruction included in the data file, store a database included in the data file, execute software code included in the data file, update its firmware by use of the data file, update or add an ML model by use of the data file, etc. Step 115 is optional. For example, instead of performing step 115, the TD may transmit the data file to a dedicated TD, for example within the above-mentioned cluster.

It should be noted that any one of steps 111-113 may be repeated any number of times before step 114 is performed. Step 114 may be triggered when the TD detects that all data items are available at the TD. Alternatively, step 114 may be performed repeatedly, based on the available data items, until a complete datafile is created.

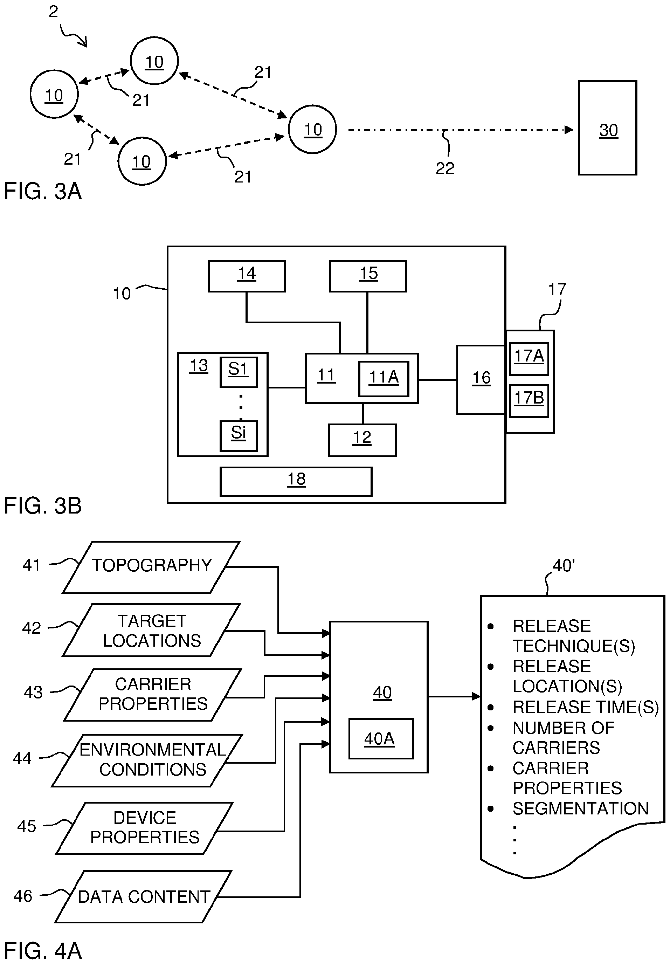

FIG. 3A shows an example of a cluster 2 of TDs 10. As used herein, a cluster or group of TDs 10 is formed when the included TDs are capable of communicating locally with each other, by wire or wirelessly. The local communication between TDs in the cluster is typically bidirectional, as indicated by double-ended arrows 21 in FIG. 3A, to enable data exchange between the TDs. In some embodiments, the TDs in the cluster are operable to form nodes in a local area network (LAN) of any suitable topology. In some embodiments, the local communication within the cluster is performed by short-range wireless communication. In some embodiments, the local communication is performed by broadcasting. As indicated by an arrow 22 in FIG. 3A, the cluster 2 may also communicate wirelessly with a remote server or back-end device 30, which is located beyond the range of the local communication. This remote wireless communication 22 may be one-directional and used for transferring status information or sensor data to the remote server 30. In some embodiments, the remote wireless communication 22 may be bi-directional, allowing the cluster 2 to receive data from the remote server 30. However, it is realized that any communication of data from the remote server 30 to the cluster 2 will be restricted to conserve power at the included TDs 10. The communication between the cluster 2 and the remote server 30 may be end-to-end or include one or more intermediate communication devices (not shown). For example, a drone may be operated to intercept wireless signals from the cluster 2 and relay the signals or data encoded by the signals to the remote server 30. Alternatively, the remote server 30 may be located on such a drone.

It is to be understood that the remote communication need not be performed by a single TD 10 within a cluster 2 as shown in FIG. 3A. Instead, individual TDs, whether included in a cluster or not, may be operable to individually communicate data to, and optionally receive data from, the remote server 30.

Generally, to improve performance of the DT2 concept, some challenges need to be addressed. A first challenge is that all different carriers in a distribution set may not arrive at every intended TD. A second challenge is that some carriers may be degraded when they arrive at a TD, to the extent that the encoded data has deteriorated. The encoded data may thereby be only partially readable or even totally corrupted and useless.

The first challenge may be mitigated by careful simulation before performing the data transfer method 100 (FIG. 2A), to ensure that steps 101-104 are adapted to the actual use case. However, despite preparatory simulation, there may still be a nonnegligible probability that some TDs will not receive all different carriers and thereby be unable to recreate the data file. The first challenge may be further mitigated by the use of the data sharing according to step 113 in the data reception method 110 (FIG. 2B). Thus, in some embodiments and according to step 113, a respective TD 10 in a cluster 2 is operated to receive, by local communication 21, incoming data comprising data items that have been retrieved by one or more further TDs in the cluster 2. Thereby, the respective TD 10 is operable, in step 114, to recreate the data file based on the data items that have been retrieved by this TD 10 and the data items that are included in the incoming data. Step 113 effectively expands the spatial extent for collection of carriers in proportion to the number of TDs included in the cluster 2. This will increase the likelihood that the individual TD is capable of recreating the data file.

Typically, all TDs 10 in the cluster 2 are configured to share data items. Thus, in some embodiments and according to step 113, the respective TD 10 in the cluster 2 is operable to transmit, by local communication 21, outgoing data comprising at least a subset of the data items that are retrieved by step 112.

The data sharing step 113 may be initiated whenever one or more TDs in the cluster have received a given number of carriers, or at predefined time points.

The data sharing step 113 may be seen to implement a "repair scheme", in which missing data items are supplied from other TDs. Depending on implementation, step 113 may also allow for distribution of a subset of a data item within the cluster. For example, the subset may be needed by a TD that has received a degraded carrier, in which the encoded data item is only partially readable. The data sharing step 113 may be implemented by use of any suitable content distribution protocol, including but not limited to Hypertext Transfer Protocol (HTTP), Multicast, Information-Centric Networking (ICN), Content-Centric Networking (CCN), or BitTorrent. Generally, the data sharing step 113 involves exchange of "control data" between the TDs in a cluster.

The data sharing step 113 may involve a distribution of tasks related to the carriers. In one example, step 113 may involve deciding on the carriers that the individual TD should decode for retrieval of data items. As a result of step 113, each TD will physically filter out the carriers that are outside its responsibility before decoding is performed. Thereby, the workload for decoding is distributed between the TDs the cluster, resulting in a reduced total power consumption. The distribution of decoding presumes that the carriers are uniquely identifiable without decoding, for example by use of a dedicated marker (cf. discrimination marker 34 in FIG. 7C). The distribution of workload is particularly relevant when the decoding of carriers is costly in terms of power or a consumable, for example when the data segments are encoded by DNA sequences in the carriers or when a protective layer on the carrier needs to be dissolved to access the encoded data item. In another example, step 113 may involve deciding on the TD that should transmit a specific data item to one or more other TDs in the cluster. This may reduce data traffic and thus power consumption within the cluster.

The distribution of tasks may be determined by one TD in the cluster or be decided collectively by the TDs in the cluster.

The distribution of tasks in step 113 may be performed based on the available power or processing capacity of the individual TDs within the cluster. Alternatively or additionally, the distribution of tasks may be based on the deterioration of the respective carrier. For example, if the TDs in the cluster have received plural carriers encoding the same data item, the carrier with the least degradation may be decoded by the TD that has received this carrier. The degradation may be detectable from a dedicated marker in or on the carrier (cf. degradable marker 33 in FIG. 7B).

The distribution of decoding is optional. In an alternative, each TD retrieves data items from the carriers that it has collected, and negotiates within the cluster for missing data items and transmits any requested data items to other TDs within the cluster.

In another variant, which may be combined with the data sharing of step 113, a TD may request and receive one or a few missing data items from the remote server 30 (FIG. 3A).

It is realized that the second challenge of carrier degradation is also mitigated by the data sharing of step 113, by enabling a corrupt data item or data item part to be replaced by shared data. Detection of corrupt data items or data item parts may be achieved by including an error detection feature in the data segments that are encoded in or on the carriers. Any conventional technique may be used. In a first error correction example, one or more checksums are included in the data segments. If a TD detects that a checksum is violated for a retrieved data item, the TD may decode one or more further carriers that contain the same data item until the checksum is fulfilled. If the checksum is not fulfilled in any of these additional data items, the TD may combine different parts of the available data items until the checksum is fulfilled. In a variant, the TD may request and receive the additional data items from other TDs in the cluster. In a second error correction example, error correction codes (ECCs) are distributed among the data segments in accordance with Reed-Solomon coding when the data segments are generated in step 101, enabling both detection and correction of errors by a receiving TD. In a third error correction example, a low density parity check (LDPC) code is applied when the data segments are generated in step 101, enabling both detection and correction of errors by a receiving TD.

FIG. 3B is a block diagram of an example target device, TD, 10. The illustrated TD 10 comprises a control system ("logic") 11 for controlling the operation of the TD 10, computer memory 12 for data storage, a sensor arrangement 13 for generation of sensor data, a first communication device 14 for wireless communication, a second communication device 15 for wireless communication, a reading device 16 for reading data items from carriers, and carrier input device 17 for providing carriers to the reading device 16. The TD 10 is self-powered by a power source 18. The power source 18 may comprise an energy storage unit such as a battery, capacitor, super capacitor, fuel cell, or the like, and/or an energy harvesting unit such as a photovoltaic cell, a vibrationpowered generator, a thermoelectric generator, a wind turbine, a salinity gradientpowered generator, etc.

The control system 11 may be implemented exclusively by processor circuitry or by software executed on processor circuitry. As shown in FIG. 3B, the control system 11 may include a data processing module 11A, which is configured to process the sensor signal(s) from the sensor arrangement 13 for extraction of sensor data. In some embodiments, the data processing module 11A comprises a trained ML model.

The sensor arrangement 13 comprises one or more sensors S 1, ..., Si. The sensor arrangement 13 may be a unitary device or a combination of physically separate sensors. Each sensor S1, ..., Si is configured to measure a respective physical property and output a corresponding sensor signal, which may or may not be electrical. The control system 11 is configured to receive the sensor signal, and thereby a measured value of the physical property, from the respective sensor. The number and types of sensors included in the sensor arrangement 13 depend on the intended use of the TD 10. Examples of sensor parameters that may be measured by the sensor arrangement 13 include moisture, humidity, temperature, pressure, light exposure, nutrient, pH, electrical conductivity, cation exchange capacity, organic carbon, vibration, etc. Alternatively or additionally, the sensor arrangement 13 may include one or more imaging or scanning devices.

The first communication device 14 is configured to perform the local wireless communication (cf. 21 in FIG. 3A). The communication device 14 may comprise a transceiver configured for short-range wireless two-way communication with other TDs 10, for example by one or more of Bluetooth, BLE, LR-WPAN, UWB, ZigBee, Z-Wave, ANT, ANT+, 6LoWPAN, WirelessHART, IrDA, etc. In a variant, the communication device 14 is configured for local wired communication with other TDs 10.

The second communication device 15 is configured to perform remote wireless communication (cf. 22 in FIG. 3A). The communication device 15 may comprise a transmitter or transceiver configured for mid-range or long-range wireless communication. The communication device 15 is not used for communication with other TDs 10, but rather for one-way or two-way communication with the remote server 30 (FIG. 3A) or an intermediate device. The communication device 15 may implement any available communication technology, proprietary or standardized, including but not limited to GSM, EDGE, HSDPA, W-CDMA, CDMA, TDMA, LTE, 5G, Wi-MAX, Wi-Fi, LORAN, ISA100, etc. Alternatively or additionally, the long-range communication may involve satellite communication.

The carrier input device 17 comprises a harvesting device 17A, which is configured to collect carriers that arrive at the TD 10 and convey the collected carriers to the reading device 16, and a disposal device 17B, which is configured to remove the carriers that have been decoded by the reading device 16. The disposal device 17B may also be operable to dispose of carriers that are not be decoded, for example carriers that are deemed to be too degraded or carriers that are found to be duplicates of carriers that have already been decoded. Examples of the harvesting and disposal devices 17A, 17B are given below with reference to FIGS 8A-8C.

The performance of the carrier input device 17 may be improved by adjusting its operation based on one or more environmental features measured by the sensor arrangement 13. Such an environmental feature represents the local environment of the TD 10 and may be indicative of the availability of carriers at the TD 10. The operation of the carrier input device 17 may be adjusted to increase/decrease its collection efficiency or extend/postpone the collection of carriers. In one non-limited example, if carriers are to be transported to a TD 10 by a liquid, the TD 10 may be configured to extend or postpone the collection of carriers as long as the environmental feature indicates that the local environment is dry.

The reading device 16 is configured to retrieve the data items from at least a subset of the carriers that are collected by the harvesting device 17A. The reading device 16 is thus adapted to the technique used for encoding data segments into carriers. In one example, the reading device 16 comprises an optical detector (camera, scanner, etc.), a magnetic detector, a tactile detector, or a DNA sequencer. The reading device 16 may also comprise a decoder, which is configured to convert a detected code, for example a pattern or a DNA sequence, into a data item.

The data reception method 110 of FIG. 2B may be performed by the TD 10 in FIG. 3B under control by the control system 11. Specifically, step 111 is performed by use of the data input device 17, step 112 is performed by use of the reading device 16, step 113 is performed by use of the first communication device 14, step 114 is performed by the control system 11 or by a dedicated device (not shown), and step 115 is performed by the control system 11, optionally by use of the second communication device 15 and/or the storage memory 12.

Based on step 113, as discussed hereinabove, the respective TD 10 may be configured to exchange, by the first communication device 14, control data with one or more further TDs 10 in the cluster 2, where the control data defines one or more data items to be transmitted between the respective TD 10 and the one or more further TDs 10. Further, in some embodiments, the control data designates a selected TD, among the TDs 10 in the cluster 2, to retrieve a selected data item from carriers that are received by the selected TD. Such embodiments enable balancing of the workload between the TDs 10 in the cluster 2 and/or accounting for the available power in the respective TD 10. Generally, the total power consumption within the cluster will also be reduced. In some embodiments, the respective TD 10 is configured to determine at least part of the control data based on an estimated degradation of the data segment that is encoded in or on a carrier. Such embodiments enable the decoding to be performed from a carrier with relatively little degradation. This will reduce the resources spent on decoding within the cluster.

FIG. 3B is merely given as an example. A block in FIG. 3B need not be implemented by a unitary component. Rather, the blocks in FIG. 3B are to be interpreted to represent functions. Thus, two blocks may be implemented by at least partly the same components in the TD 10. For example, the communication devices 14, 15 may be implemented by a single circuit, or part of the functionality of the communication devices 14, 15 may be performed by common hardware. In a further example, decoding functionality of the reading device 16 may be performed by processor circuitry that is also used by the control system 11.

As noted, simulations may be performed in advance of the data transfer method 100, for example to maximize the probability of complete reception of all data items at a cluster, at each or many TDs within a cluster, or at a selected TD, which may or may not be part of a cluster. FIG. 4A shows an example simulation device 40, which is configured to produce a property list ("definition data") 40' with settings for the data transfer, based on input data 41-46 defining constraints for the data transfer. The simulation device 40 may comprise a predefined model 40A, for example a neural network or a rule-based model. The model 40A may, for example, be operated to generate a digital twin of the target area, allowing an operator to test the impact of different input data values on the dissemination of carriers in relation to TDs in the target area or to perform an automatic 4-dimensional (x, y, z, t) search in the digital twin to achieve a proper data transfer.

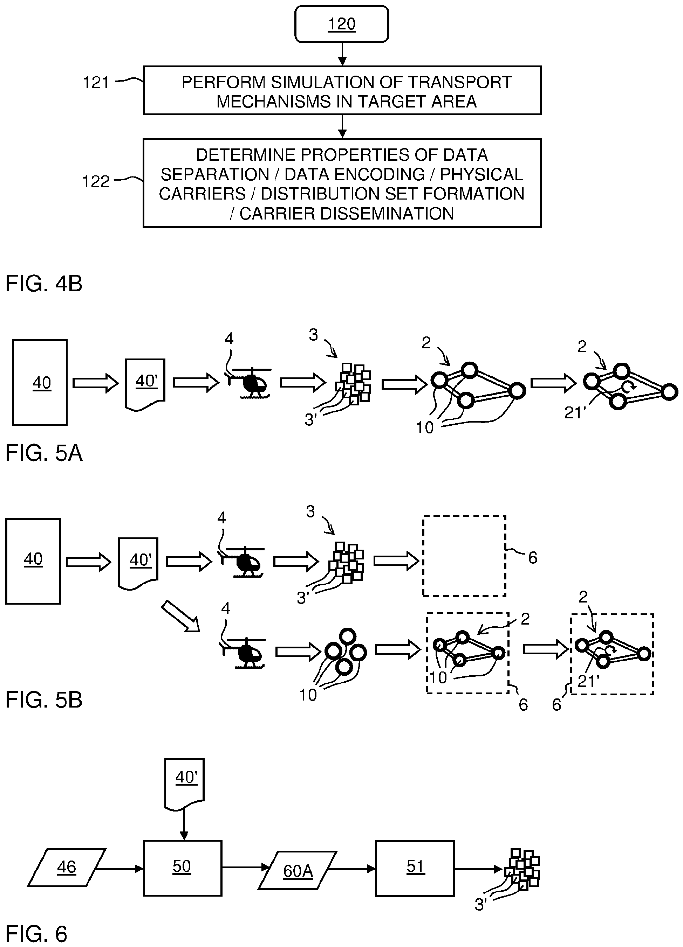

An example of a method 120 performed by the simulation device 40 is shown in the flow chart of FIG. 4B. In step 121, by use of the predefined model 40A, a simulation is performed of one or more ETMs 5 (FIG. 1) in time and space within the target area 1. In step 122, one or more properties of the data transfer method 100 is determined based on the simulation. For example, step 122 may define a property of the step 101 of separating the data file into data segments and/or a property of the step 102 of encoding the data segments and/or a property of the carriers and/or a property of the step 103 of forming the distribution set 3 and/or a property of the step 104 of disseminating the distribution set 3. Examples of such properties are shown in the property list 40' in FIG. 4A, including the release technique(s), the release location(s), the release time point(s), the number of carriers per data segment, one or more carrier properties, etc.

The release technique refers to the way that carriers are released in step 104, for example at elevated altitude, through air, through water or directly onto the ground. The release technique may also include how the distribution set is formed in step 103, for example if the carriers are mixed with a carrier fluid, and properties of this carrier fluid.

The release location refers to the location where a distribution set, or a subset thereof, is released in step 104. The release location may be given as a single position or a range of positions. A range of positions may be applicable if the distribution set is continuously released while a release vehicle is moved within the target area.

The release time point refers to the time point when the distribution set, or a subset thereof, is released in step 104. Thus, the release time point is associated with the release location and may be given as a single time point or a range.

The number of carriers per data segment is used by step 102 and defines the number of identical carriers to be included in the distribution set, i.e., a carrier redundancy.

The carrier properties relate to the carriers to be encoded in step 102, for example the base material of the carrier, how the data segment is to be encoded, if a discrimination marker is to be used and its type, if a degradable marker is to be used and its type, etc.

As indicated in FIG. 4A, the properties may also relate to the segmentation in step 101, such as how to split the data file into data segments, the number of data segments, the use of error detection/correction in the data segments, etc.

These are merely examples of properties to be included in the property list 40' and additional properties are possible. Further, some of the foregoing properties may instead be specified by the input data to the simulation device 40, for example carrier properties or release technique(s).

Turning to the examples of input data in FIG. 4A, input data 41 defines the topography of the target area. The topography may be given in two or three dimensions and includes the extent of the target area. Input data 42 defines one or more target locations for the data transfer within the target area. The respective target location may be given by a known location of a TD or a cluster. Alternatively, if the carriers are disseminated before the TDs, the target location may correspond to a predicted or expected location of a TD or cluster. Input data 43 defines one or more properties of the carriers, for example the maximum amount of data to be encoded on each carrier, weight, transport properties, nominal lifespan (see below), carrier redundancy, etc. Input data 44 defines environmental conditions in the target area, for example moisture, wind, precipitation, temperature, pressure, etc. The environmental conditions may be prevalent or forecasted, or both. For example, prevalent environmental conditions may be obtained by the remote server (FIG. 3A) from sensor data measured and transmitted by TDs located in the target area. Input data 45 defines properties of the respective TD to receive the data file, for example type of carrier input device 17, type of reading device 16, local communication ability, remote communication ability, etc. The local/remote communication ability may be measured and transmitted by the respective TD, if the TD is located in the target area. Instead of being provided as input data, the local/remote communication ability may be estimated by the simulation device 40 based on the target location(s) and the topography. Input data 46 defines the content of the data file to be transferred, for example the amount of data, or the structure of the content. The structure of the content may, for example, be used by the simulation device 40 to assess the likelihood of the content being irreversibly corrupted.

The above-mentioned ETMs may also be separately defined as input data, or may be determined based on the topography 41 and/or the environmental conditions 44.

In one specific example, the simulation 120 is performed based on topography, predicted weather conditions, the target locations, and the local communication ability of the respective TD. The aim of the simulation 120 is to achieve the highest probability of each TD being able to recreate the data file. In this example, the output of the simulation 120 is the release location(s), the release time point(s), the segmentation of the data file, and the carrier redundancy. In the example of FIG. 1, the simulation 120 may, among other things, take into account which and how many carriers that are lost when blown into a hill before reaching the TDs 10 in the lowland region 1B.

In some embodiments, when the target locations in the target area are unknown or irrelevant, the simulation 120 determines the release location(s) and time point(s) by accounting for the ETMs, the topology and environmental conditions. If the target locations are known or estimated, the simulation 120 may also account for the target locations.

In some embodiments, the target locations are restricted to represent a subset of the TDs in the target area ("TD subset") and are determined by the simulation 120. For example, the TD subset may include at least one TD in each cluster, and the simulation 120 may select the TD subset based on the local communication ability and/or power status of the respective TD. One reason for the selection may be to enable a TD with limited local communication ability and/or low power to retrieve more data items from collected carriers so as to reduce the need for data sharing. The power status of the respective TD may be obtained by the remote server. Alternatively or additionally, the simulation 120 may select the TD subset in view of the carrier input device 17 in the respective TD, for example to account for differences between the TDs in their ability to collect carriers.

In some embodiments, the simulation 120 determines plural release time points to achieve approximately the same arrival time of different carriers at a TD. The expected transport time from release to receipt may differ between carriers, for example if carriers that encode different data segments have different weights.

FIGS 5A-5B are schematic illustrations of two different scenarios for using simulation output to achieve data transfer in a target area.

FIG. 5A shows a static scenario, in which TDs 10 have been distributed within the target area before the simulation, and each TD 10 has a predefined and fixed position in the target area. The target locations are therefore known. The simulation device 40 is operated to determine, based on input data that includes the target locations, a property list 40' that defines the data transfer method 100 so as to achieve a dissemination of a portion the distribution set 3 to the respective TD 10. A distribution set 3 of encoded carriers 3' is then released, in accordance with the property list 40', for example from a vehicle 4, so as to be transported to at least one cluster 2 of TDs. As indicated by a curved arrow 21', data is then shared within the cluster 2 upon receipt of at least part of the distribution set 2.

FIG. 5B shows a dynamic scenario, in which the simulation is made before the TDs are distributed within the target area. While the exact future locations of the TDs may be unknown, the intended region 6 within which the TDs are to be located is known. The target locations may be given as a matrix of locations within this intended region 6. The simulation device 40 is operated to determine a property list 40' that defines the data transfer method 100 so as to achieve a dissemination of the distribution set 3 to the matrix of locations. A distribution set 3 of encoded carriers 3' is then released, in accordance with the property list 40', for example from a vehicle 4, so as to be transported to the intended region 6. Then, at a later time, a plurality of TDs 10 are distributed within the intended region 6, for example from a vehicle 4 as shown in FIG. 5B. When the TDs 10 have been properly distributed, they collect carriers, retrieve data items, and optionally share data within clusters, to recover the data file.

The dynamic scenario may be used to dynamically and automatically configure the TDs 10 based on their location. For example, different data files may be transferred to different intended regions 6, where the different data files are configured to result in different configurations of the TD 10. Thereby, the TDs 10 will be differently configured in different intended regions 6. For example, the intended regions 6 may correspond to fields with different crops, and the TDs 10 in different fields may be configured to measure different sensor parameters and/or transmit different sensor data. Thus, the dynamic scenario mitigates the need to preconfigure individual TDs for different tasks and simplifies the logistics when distributing TDs.

FIG. 6 shows an example implementation of steps 101-102 in the method 100 of FIG. 2A. A segmentation device 50 receives the data file 60 to be transferred and operates to generate a plurality of data segments 60A that jointly correspond to the data file 60. As shown, the segmentation device 50 may generate the data segments 60A based on the property list 40' that has been generated by the simulation device 40 in FIG. 4A. A production device 51 is configured to receive the data segments 60A and generate multiple identical carriers 3' for each data segment 60A. Depending on implementation, the production device 51 may be configured to encode the data segments 60A by imprinting, printing (inkjet, laser, thermal), etching, deposition, engraving, DNA synthesis, or any other suitable technique for storing digital data in tangible form.

FIGS 7A-7C show different examples of encoded carriers 3'. The carrier 3' comprises a base material 31, and a code 32 that represents or corresponds to a data segment (60A in FIG. 6). The base material 31 may have any composition, including but not limited to plastics, metal, wood, paper, cellulose, or carton. The code 32 may be provided on the surface of the base material 31 or be embedded within the base material 31. The base material 31 may be covered by one or more layers of cover material. The base material 31 and the cover material may or may not be transparent. The carrier 3' is typically a small unit. For example, the dimensions of the carrier 3' may be in the range of 10 nm - 1 mm. The physical properties of the carrier may be adapted to the expected environment in the target area and the ETMs. For example, the properties of the carrier may differ if the main ETM is wind or water. Likewise, the properties of the carrier may differ if the TDs are located above ground, on ground, buried in the ground, floating on water, or submerged in water. In some embodiments, the carriers are buoyant or neutrally buoyant.

In some embodiments, the carriers are degradable and/or made of ecological material. This will ensure that the carriers do not pollute the target area and obviates the need to perform a potentially costly and cumbersome collection sweep of the target area. The use of degradable material limits the lifespan of the carrier, and provides the additional advantage of mitigating the need to discriminate between different generations of carriers. Different generations may be used to transfer different data files at different times. The presence of carriers belonging to many different generations will increase the complexity of data transfer. The use of degradable material also provides the option of tailoring the degradation to the environment in the target area, for example the environment of the TDs. A degradable carrier may be assigned a nominal lifespan, which indicates for how long a data item, or a useful portion thereof, may be extract from the carrier by the TD. As noted above, the nominal lifespan may be provided as input to the simulation (cf. 43 in FIG. 4A). By accounting for the nominal lifespan in the simulation, the probability of correct data transfer may be increased.

It is currently believed that the nominal lifespan of the carrier should be in the range of 1 day to 6 months.

As used herein, "degradable" implies that the carrier is worn by environmental processes. For example, the base material 31 may be a corrodible metal, a plastic material that is gradually dissolved, paper/cellulose/carton that is disintegrated by moisture. In some embodiments, the carrier is biodegradable. The term "biodegradable" implies that the carrier is broken down by the action of microorganisms. Examples of biodegradable material include wood, paper, carton, cellulose, as well as certain plastics and metals.

FIG. 7A shows a carrier 3' in the form of a thin flake, which is provided with a pattern 32 that encodes a data segment. In the illustrated example, the pattern is implemented as a QR code.

FIG. 7B shows a similar carrier 3', which is further provided with a degradable marker 33, which is configured to be degraded in correspondence with the encoded data segment. In other words, the degradable marker 33 provides an indication of the state of the encoded data segment and how much of the encoded data segment that may be retrieved by reading the code 32. In some embodiments, the degradable marker 33 has a color that fades or otherwise changes over time and in correspondence with the degradation of the carrier 3'. The reading device 16 of the TD may be configured to read the degradable marker 33 from the respective carrier 3' and determine a state of degradation for the carrier. Based on the state of degradation, the TD may decide, optionally in cooperation with other TDs, if the code 32 should be read and decoded.

FIG. 7C shows a grain-shaped carrier 3' that embeds, within a base material 31, a DNA sequence 32 that encodes a data segment. It is well-known as such that data may be encoded in and retrieved from DNA sequence. Examples are given in the article "Data Storage Based on DNA", by Hao et al., published in Small Struct., 2: 2000046 (2021), which is incorporated by reference. To read the carrier 3' in FIG. 7C, the reading device 16 of the TD may be configured to dissolve the base material 31 to release the DNA sequence 32 and then perform DNA sequencing to retrieve the data item from the DNA sequence 32. The carrier 3' is further provided with a discriminatory marker 34, which discriminates between carriers 3' that encode different data segments. The discriminatory marker 34 is accessible to a TD separately from the code 32. This means that the TD is able to discriminate between different carriers independently of the code 32 and without having to retrieve data items from the carriers. This minimizes the risk of duplication of effort and thereby saves power, provided that the decoding of the discriminatory marker 34 consumes less power than the decoding of the code 32. The discriminatory marker 34 may, for example, be a unique symbol, a machine-readable code that encodes a unique identifier, a unique color, etc. The discriminatory marker 34 is not only useful when the code 32 is a DNA sequence but may be provided on any type of carrier.

FIGS 8A-8C show examples of mechanisms in a TD for harvesting and reading carriers. In FIG. 8A, the TD comprises a harvesting device 17A, a disposal device 17B and a collection chamber 17C. A reading device 16 is arranged to read data items from carriers 3' that enter the chamber 17C. The harvesting device 17A comprises a funnel that is arranged to taper towards an inlet to the chamber 17C. A fan is operable in harvesting mode and a disposable mode, respectively. In harvesting mode, the fan is operated to generate a fluid flow into the chamber 17C to draw carriers from the funnel into the chamber 10. In the disposal mode, the fan is operable to generate a fluid flow out of the chamber to expel carriers from the chamber 10 via the funnel. Although not shown in FIG. 8A, the chamber 17C may include structures for ensuring proper orientation of the carriers 3' in relation to the reading device 16.

In FIG. 8B, the harvesting device 17A comprises a sticky layer which is arranged on a support surface 17C to capture carriers. The sticky layer may be an adhesive, glue, or the like. In this example, the reading device 16 is located beneath the support surface 17C. It is realized that the support surface 17C assists in immobilizing and orienting the carriers 3' in relation to the reading device 16. The disposal device 18B comprises a scraper, which is operated by an actuator to scrape off the carriers from the sticky layer.

In FIG. 8C, the harvesting device 17A and the disposal device 17B are jointly formed by an electromagnet. The electromagnet is located behind a support surface 17C and is selectively operable to attract carriers towards the support surface 17C (harvesting mode) or repel carriers from the support surface 17C (disposal mode). The reading device 16 is located in front of the support surface 17C. The carriers comprise a ferromagnetic material, which may be located so that the carriers are automatically oriented in relation to the reading device 16 when the carriers 3' are attracted onto the support surface 17C. In a variant, the carriers 3' are charged, and the electromagnet is replaced by a charge generator, which is operable to selectively generate a positive charge or a negative charge on the support surface 17C. Given that unlike charges attract and like charges repel, the charge generator is thereby selectively operable in a harvesting mode and a disposal mode.

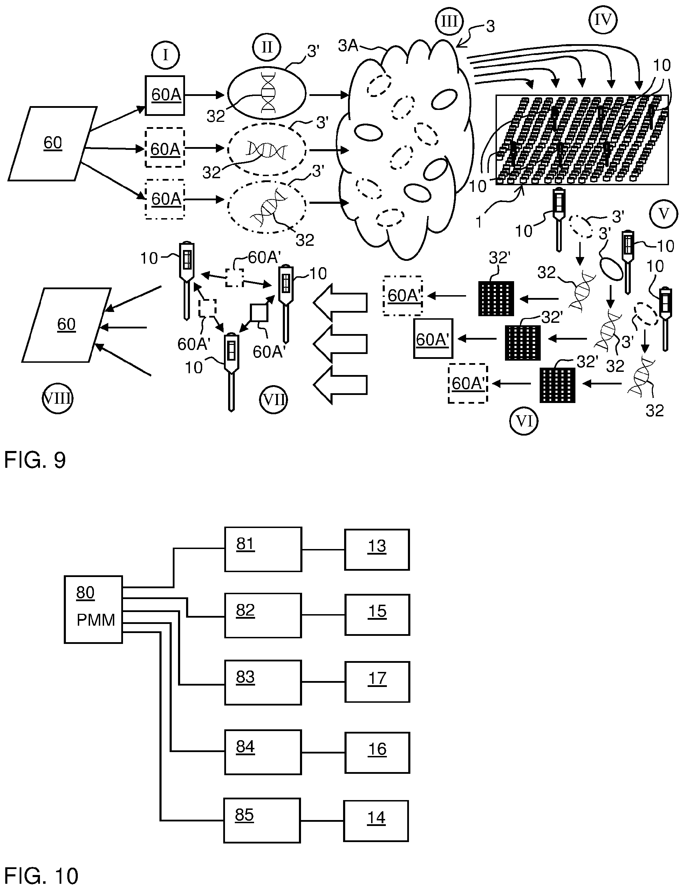

FIG. 9 shows an example implementation of the DT2 concept. In FIG. 9, the DT2 concept is applied to transfer a data file to a plurality of TDs 10 that have been distributed to monitor the conditions for crops planted in a field 1. The TDs 10 are sensor devices configured for two-way local wireless communication and one-way remote wireless communication to a server (not shown). Roman numerals I-VIII indicate different actions taken during data transfer. The actions correspond to steps in FIGS 2A-2B. In step I (cf. step 101), the data file 60 is divided into data segments 60A, for example BitTorrent pieces. In step II (cf. step 102), the data segments 60A are encoded as DNA 32 and encapsulated to form a capsule 3'. In step III (cf. step 103), the capsules 3' are mixed with water to form a liquid 3 for distribution. In step IV (cf. step 104), the liquid 3 is sprayed over the field 1. In step V (cf. step 111), the TDs 10 collect the liquid and dissolve the capsules 3' contained in the liquid to extract the DNA 32. In step VI (cf. step 112), the TDs 10 sequence the extracted DNA 32 into data items 60A', which correspond to the data segments 60A. In step VII (cf. step 113), the TDs 10 perform local data sharing, for example to obtain missing data items or data item parts, correct errors, etc. The TDs 10 may, for example, use BitTorrent and a consensus algorithm for data item consistency. In step VIII (cf. step 114), the respective TD 10 assembles the data items 60A' into the original data file 60.

The TDs 10 are typically power-limited. To conserve energy, each TD 10 may be configured to be in a default low-power mode and intermittently wake up, for example in accordance with a predefined sensing schedule, to obtain and store sensor data. For example, the TD 10 may obtain sensor data a predefined number of times every hour, day or week. Each TD 10 may also be configured to wake up to transmit the stored sensor data to the server by remote communication, for example in accordance with a predefined transmission schedule. For example, the TD 10 may transmit the sensor data a predefined number of times every week or month. It may be equally relevant to conserve energy in the TDs during the data transfer in accordance with the DT2 concept. FIG. 10 shows an example of a power management system in a TD. A power management module, PMM, 80 is configured to selectively activate controllers 81-85, which are thereby operable to perform a respective function of the TD. Controller 81 is connected to the sensor arrangement 13 and is configured to read and store sensor data. Controller 82 is connected to the second communication device 15 and is configured to retrieve sensor data from memory and operate the communication device 15 to transmit the sensor data to the remote server. Controller 83 is connected to the carrier input device 17 and is configured to operate the input device 17 to harvest and/or dispose of carriers. Controller 84 is connected to the reading device 16 to retrieve data items from collected carriers. Controller 85 is connected to the first communication device 14 and is configured to perform data sharing with other TDs. The PMM 80 is configured to minimize the power consumption of the TD 10. Thus, each controller 81-85 is only intermittently activated, thereby allowing the TD 10 to be in low-power mode most of the time. For example, controller 85 is activated at significantly larger time intervals than controllers 83, 84, and controller 84 may be activated at larger time intervals than controller 83. Further, the operation of controllers 83-85 is independent of the operation of controllers 81-82.

It should be noted, though, that the DT2 concept may be implemented for data transfer to any type of TD, which may or may not be restricted in terms of power consumption or wireless communication capability.

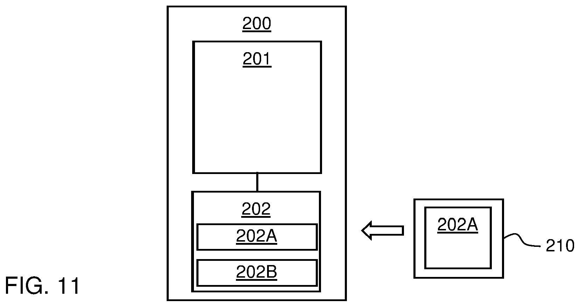

The structures and methods disclosed herein may be implemented by hardware or a combination of software and hardware. FIG. 11 schematically depicts a calculation device 200, which is at least partly implemented by software and which may represent processing logic in a TD 10, a simulation device 40, a segmentation device 50 or a production device 51. The calculation device 200 comprises one or more processors 201 and computer memory 202. The processor(s) 201 may, for example, include one or more of a CPU ("Central Processing Unit"), a DSP ("Digital Signal Processor"), a microprocessor, a microcontroller, an ASIC ("Application-Specific Integrated Circuit"), a combination of discrete analog and/or digital components, or some other programmable logical device, such as an FPGA ("Field Programmable Gate Array"). A control program 202A comprising computer instructions is stored in memory 202 and executed by the processor(s) 201 to perform any of the methods, procedures, operations, functions, or steps described in the foregoing. As indicated in FIG. 11, memory 202 may also store control data 202B for use by the processor(s) 201. The control program 202A may be supplied to the computing resource on a computer-readable medium 210, which may be a tangible (non-transitory) product (for example, magnetic medium, optical disk, read-only memory, flash memory, etc.) or a propagating signal.

In the following, clauses are recited to summarize some aspects and embodiments of the invention as disclosed in the foregoing.
C1. A method of distributing a data file (60) to an electronic device (10) located within a target area (1), said method comprising: separating (101) the data file (60) into a plurality of data segments (60A) that jointly correspond to the data file (60); encoding (102) the plurality of data segments (60A) in or on physical carriers (3') so that each one of the physical carriers (3') is encoded with one data segment from the plurality of data segments (60A) and each of the data segments from the plurality of data segments (60A) is encoded in or on multiple physical carriers (3'); forming (103) a distribution set (3) comprising the multiple physical carriers (3') for each of the plurality of data segments (60A); and disseminating (104) the distribution set (3) within the target area (1) for receipt by the electronic device (10).
C2. The method of C1, wherein said disseminating (104) comprises: releasing the physical carriers (3') in the distribution set (3) so that to allow one or more environmental transport mechanisms (5) to spread the physical carriers (3') within the target area (1).
C3. The method of C2, wherein the one or more environmental transport mechanisms (5) comprise at least one of wind, diffusion and water flow.
C4. The method of C2 or C3, further comprising: performing (121), by use of a predefined model (40A), a simulation of the one or more environmental transport mechanisms in time and space within the target area (1), and determining (122), based on the simulation, one or more properties of at least one of said separating (101) the data file, said encoding (102) the plurality of data segments, said forming (103) the distribution set (3), said physical carriers (3'), or said disseminating (104) the distribution set (3).
C5. The method of C4, wherein said one or more properties comprises at least one of a release technique for releasing the distribution set (3) within the target area (1), a release location within the target area (1) for releasing at least a subset of the distribution set (3), a release time point for releasing said at least a subset of the distribution set (3), or a number of the physical carriers (30) that encode a respective data segment (60A).
C6. The method of C4 or C5, wherein the simulation accounts for one or more of a topography (41) of the target area (1), one or more target locations (42) within the target area (1) to be reached by the distribution set (3), a carrier property (43) of the physical carriers (3'), environmental conditions (44) within the target area (1), a device property (45) of the electronic device (10), and a content of the data file (60).
C7. The method of C6, wherein the carrier property (43) comprises a nominal lifespan of a respective physical carrier (3').
C8. The method of any one of C4-C7, wherein the electronic device (10) has a predefined and fixed position in the target area (1), and wherein said one or more properties are determined to achieve a dissemination of a portion the distribution set (3) to the predefined and fixed position of the electronic device (10).
C9. The method of any preceding clause, further comprising: operating the electronic device (10) to retrieve data items (60A'), which correspond to the data segments (60A), from physical carriers (3') in the distribution set (3) as received by the electronic device (10), and to recreate a data set corresponding to the data file (60) based at least partly on the retrieved data items (60A').
C10. The method of C9, wherein the electronic device (10) is included in a group (2) of electronic devices within the target area (1), the electronic devices (10) being operable to share data within the group (2) by wireless communication, wherein said method further comprises: operating the electronic device (10) to receive, by the wireless communication, incoming data comprising further retrieved data items (60A') from one or more further electronic devices (10) in the group (2), and to recreate the data set based on the retrieved data items (60A') and the further retrieved data items (60A').
C11. The method of C10, wherein the wireless communication is performed by short-range wireless transceivers (15) in the electronic devices (10).
C12. The method of any preceding clause, wherein the physical carriers (3') are degradable.
C13. The method of any preceding clause, wherein each of the physical carriers (3') comprises a base material (31) of at least one of paper, wood, metal, plastics, cellulose, or carton.
C14. The method of any preceding clause, further comprising: providing a respective physical carrier (3') with a degradable marker (33), which is degradable in correspondence with a degradation of the encoded data segment of respective physical carrier (10).
C15. The method of any preceding clause, wherein at least a portion of the multiple physical carriers (3') are buoyant.
C16. The method of any preceding clause, wherein said encoding (102) comprises providing a machine-readable code (32) that encodes said one data segment from the plurality of data segments (60A) in or on the physical carrier (3').
C17. The method of C16, wherein the machine-readable code (32) comprises a pattern on or in the physical carrier (30), or a DNA sequence embedded in the physical carrier (3').
C18. The method of C16 or C17, further comprising: providing a respective physical carrier (3') with a discriminatory marker (34), which discriminates between physical carriers (3') that encode different data segments (60A) and which is accessible to the electronic device (10) without decoding of the machine-readable code (32).
C19. The method of any preceding clause, wherein the data file (60) comprises configuration data for the electronic device (10).
C20. An electronic device for use in the method according to any one of C1-C19, wherein the electronic device is configured to receive physical carriers (3') that include encoded data segments (60A), and to retrieve data items (60A'), which correspond to the encoded data segments (60A), from the received physical carriers (3'), and further comprising logic (11) configured to recreate a data set, which corresponds to the data file (60), based at least partly on the retrieved data items.
C21. The electronic device of C20, further comprising: a harvesting device (17A) which is configured to collect physical carriers (3') that arrive at the electronic device, and a reading device (16) which is configured to retrieve the data items (60A') from at least a subset of the physical carriers (3') as collected by the harvesting device (17A).
C22. The electronic device of C20 or C21, further comprising a disposal device (17B), which is configured to dispose of the received physical carriers (3') when the data items (60A') have been retrieved from the received physical carriers (3') by the reading device (16).
C23. The electronic device of C21 or C22, wherein the harvesting device (17A) is configured to orient the physical carriers (3') in relation to the reading device (16).
C24. The electronic device of any one of C20-C23, which is configured to, by use of a degradable marker (34) on a respective physical carrier (3'), estimate a degradation of the data segment (60A) encoded in or on the respective physical carrier (3'), and selectively, based on the estimated degradation, operate the reader device (16) to retrieve a data item (60A') from the respective physical carrier (3').
C25. The electronic device of any one of C20-C24, further comprising a first communication device (14) which is operable for wireless communication with one or more further electronic devices (10), wherein said logic (11) is configured to receive, by the first communication device (14), incoming data comprising one or more further data items (60A') from the one or more further electronic devices (10), and to recreate the data set based on the retrieved data items (60A') and the one or more further data items (60A').
C26. The electronic device of C25, wherein said logic (11) is configured to transmit, by the first communication device (14), outgoing data comprising at least part of the retrieved data items (60A').
C27. The electronic device of C25 or C26, which is configured to exchange, by the first communication device (14), control data with the one or more further electronic devices (10), the control data defining one or more data items (60A') to be transmitted between the electronic device and the one or more further electronic devices (10).
C28. The electronic device of C27, wherein the control data further designates a selected electronic device among the electronic device and the one or more further electronic devices (10) to retrieve a selected data item from physical carriers (3') received by the selected electronic device.
C29. The electronic device of C27 or C28, which is configured to determine at least part of the control data based on an estimated degradation of the data segment (60A) encoded in or on the respective physical carrier (3').
C30. The electronic device any one of C20-C29, further comprising a sensor arrangement (13), wherein the electronic device is configured to adjust its operation for receiving the physical carriers (3') based on an environmental feature measured by the sensor arrangement (13).
C31. The electronic device of C30, which is configured to obtain sensor data from the sensor arrangement (13) and operate a second communication device (15) to transmit the sensor data to a remote server (30).

## Claims

1. A method of distributing a data file (60) to an electronic device (10) located within a target area (1), said method comprising:
separating (101) the data file (60) into a plurality of data segments (60A) that jointly correspond to the data file (60),
encoding (102) the plurality of data segments (60A) in or on physical carriers (3') so that each one of the physical carriers (3') is encoded with one data segment from the plurality of data segments (60A) and each of the data segments from the plurality of data segments (60A) is encoded in or on multiple physical carriers (3'),
forming (103) a distribution set (3) comprising the multiple physical carriers (3') for each of the plurality of data segments (60A), and
disseminating (104) the distribution set (3) within the target area (1) for receipt by the electronic device (10).

2. The method of claim 1, wherein said disseminating (104) comprises: releasing the physical carriers (3') in the distribution set (3) so that to allow one or more environmental transport mechanisms (5) to spread the physical carriers (3') within the target area (1).

3. The method of claim 2, further comprising: performing (121), by use of a predefined model (40A), a simulation of the one or more environmental transport mechanisms in time and space within the target area (1), and determining (122), based on the simulation, one or more properties of at least one of said separating (101) the data file, said encoding (102) the plurality of data segments, said forming (103) the distribution set (3), said physical carriers (3'), or said disseminating (104) the distribution set (3).

4. The method of claim 3, wherein said one or more properties comprises at least one of a release technique for releasing the distribution set (3) within the target area (1), a release location within the target area (1) for releasing at least a subset of the distribution set (3), a release time point for releasing said at least a subset of the distribution set (3), or a number of the physical carriers (30) that encode a respective data segment (60A).

5. The method of claim 3 or 4, wherein the simulation accounts for one or more of a topography (41) of the target area (1), one or more target locations (42) within the target area (1) to be reached by the distribution set (3), a carrier property (43) of the physical carriers (3'), environmental conditions (44) within the target area (1), a device property (45) of the electronic device (10), and a content of the data file (60).

6. The method of claim 5, wherein the carrier property (43) comprises a nominal lifespan of a respective physical carrier (3').

7. The method of any one of claims 3-6, wherein the electronic device (10) has a predefined and fixed position in the target area (1), and wherein said one or more properties are determined to achieve a dissemination of a portion the distribution set (3) to the predefined and fixed position of the electronic device (10).

8. The method of any preceding claim, further comprising: operating the electronic device (10) to retrieve data items (60A'), which correspond to the data segments (60A), from physical carriers (3') in the distribution set (3) as received by the electronic device (10), and to recreate a data set corresponding to the data file (60) based at least partly on the retrieved data items (60A').

9. The method of claim 8, wherein the electronic device (10) is included in a group (2) of electronic devices within the target area (1), the electronic devices (10) being operable to share data within the group (2) by wireless communication, wherein said method further comprises: operating the electronic device (10) to receive, by the wireless communication, incoming data comprising further retrieved data items (60A') from one or more further electronic devices (10) in the group (2), and to recreate the data set based on the retrieved data items (60A') and the further retrieved data items (60A').

10. The method of any preceding claim, wherein the physical carriers (3') are degradable.

11. The method of any preceding claim, further comprising: providing a respective physical carrier (3') with at least one of a degradable marker (33) or a discriminatory marker (34), wherein the degradable marker (33) is degradable in correspondence with a degradation of the encoded data segment of respective physical carrier (10), and wherein the discriminatory marker (34) discriminates between physical carriers (3') that encode different data segments (60A) and is accessible to the electronic device (10) without decoding of a machine-readable code (32) that encodes said one data segment from the plurality of data segments (60A) in or on the physical carrier (3').

12. An electronic device for use in the method according to any one of claims 1-11, wherein the electronic device is configured to receive physical carriers (3') that include encoded data segments (60A), and to retrieve data items (60A'), which correspond to the encoded data segments (60A), from the received physical carriers (3'), and further comprising logic (11) configured to recreate a data set, which corresponds to the data file (60), based at least partly on the retrieved data items.

13. The electronic device of claim 12, further comprising at least one of:
a combination of a harvesting device (17A) which is configured to collect physical carriers (3') that arrive at the electronic device, and a reading device (16) which is configured to retrieve the data items (60A') from at least a subset of the physical carriers (3') as collected by the harvesting device (17A); or
a disposal device (17B), which is configured to dispose of the received physical carriers (3') when the data items (60A') have been retrieved from the received physical carriers (3') by the reading device (16).

14. The electronic device of claim 12 or 13, further comprising a first communication device (14) which is operable for wireless communication with one or more further electronic devices (10), wherein said logic (11) is configured to receive, by the first communication device (14), incoming data comprising one or more further data items (60A') from the one or more further electronic devices (10), and to recreate the data set based on the retrieved data items (60A') and the one or more further data items (60A'), and wherein said logic (11) is further configured to transmit, by the first communication device (14), outgoing data comprising at least part of the retrieved data items (60A').

15. The electronic device of any one of claims 12-14, further comprising a sensor arrangement (13), wherein the electronic device is configured to adjust its operation for receiving the physical carriers (3') based on an environmental feature measured by the sensor arrangement (13).
